# EUROPÄISCHE PATENTSCHRIFT

(11) **EP 3 011 223 B1**
(45) Veröffentlichungstag und Bekanntmachung des Hinweises auf die Patenterteilung: **08.08.2018**
(21) Anmeldenummer: 13730219.6
(22) Anmeldetag: 17.06.2013
(51) Int. Cl.: F16N 25/02, F16N 27/00

(54) **EINLEITUNGSVERTEILER UND VERFAHREN ZUR VERTEILUNG VON SCHMIERSTOFF**
METERING VALVE AND METHOD OF METERING A LUBRICANT
VANNE DE DOSAGE ET PROCÉDÉ DE DOSAGE DE LA GRAISSE

(43) Veröffentlichungstag der Anmeldung: 27.04.2016
(73) Patentinhaber: Baier & Köppel GmbH & Co., 91257 Pegnitz (DE)
(72) Erfinder: KÖPPEL, Bernhard, 91257 Pegnitz (DE); BÖSS, Jürgen, 95473 Creußen (DE)
(74) Vertreter: Meissner Bolte Partnerschaft mbB
(86) Internationale Anmeldenummer: PCT/EP2013/062537
(87) Internationale Veröffentlichungsnummer: WO 2014/202115

(56) Entgegenhaltungen:
- WO-A1-03/042595
- DE-U1- 20 309 553
- GB-A- 2 086 545
- US-A- 3 958 725

## Beschreibung

Die Erfindung betrifft einen Einleitungsverteiler zur Verteilung von Schmierstoff, umfassend einen Schmierstoffeinlass der mit einer Schmierstoffpumpe fluidisch verbunden und/oder verbindbar ist, insbesondere über eine Schmierstoff-Hauptleitung, einen Schmierstoffauslass zur Weitergabe einer vordosierten Menge an Schmierstoff an eine Schmierstoffanwendung, einen Dosierraum, einen Steuerkolben und einen Dosierkolben. Die Erfindung betrifft auch ein Verfahren zur Verteilung von Schmierstoff, der einem Einleitungsverteiler über eine Haupt-Schmierstoffleitung zugeführt wird.

Ein Einleitungsverteiler der vorgenannten Art ist aus der EP 2 053 300 A1 bekannt. Dort wird vorgeschlagen, dass die Funktion einer herkömmlicherweise vorgesehenen Manschette bzw. eines herkömmlicherweise vorgesehenen Wechselventils nun durch einen beweglich gelagerten Steuerkolben gewährleistet wird, der - anders als eine Manschette - zuverlässiger arbeitet, mit höheren Drucken sowie unterschiedlicheren Schmierstoffen beaufschlagt werden kann und gleichzeitig verschleißfreier arbeitet.

Auch die DE 203 09 553 U1 beschreibt einen Einleitungsverteiler der vorgenannten art.

Gegenüber dem bekannten Stand der Technik liegt der vorliegenden Erfindung die Aufgabe zugrunde, einen Einleitungsverteiler anzugeben, der einfach aufgebaut ist, sich also durch günstige Herstellkosten sowie hohe Zuverlässigkeit im Betrieb auszeichnet, sowie außerdem ein Verfahren zur Verteilung von Schmierstoff anzugeben, das sich durch besonders einfache Durchführbarkeit und Zuverlässigkeit auszeichnet.

Diese Aufgabe wird mit einem Einleitungsverteiler nach den Merkmalen des Anspruches 1 gelöst. Die Aufgabe wird auch gelöst durch ein Verfahren mit den Schritten des Anspruchs 13. Vorteilhafte Weiterbildungen sind in den Unteransprüchen angegeben.

Erfindungsgemäß ist also vorgeschlagen, dass ein Einleitungsverteiler zur Verteilung von Schmierstoff umfasst:
- einen Schmierstoffeinlass, der mit einer Schmierstoffpumpe fluidisch verbunden und/oder verbindbar ist, insbesondere über eine Schmierstoff-Hauptleitung,
- einen Schmierstoffauslass zur Weitergabe einer vordosierten Menge an Schmierstoff,
- einen Dosierraum,
- eine Entlastungskammer zur Aufnahme von Schmierstoff,
- einen beweglich gelagerten Steuerkolben, der in einer Ausgangsposition eine erste Schmierstoff-Verbindung zwischen der Entlastungskammer und einem zu dem Dosierraum führenden Druckkanal freigibt und eine zweite Schmierstoff-Verbindung zwischen dem Schmierstoffeinlass und dem Druckkanal sperrt, wobei der Steuerkolben in einer Arbeitsposition die erste Schmierstoff-Verbindung sperrt und die zweite Schmierstoff-Verbindung freigibt,
- einen beweglich gelagerten Dosierkolben,
- eine Feder, deren erstes Ende den Steuerkolben beaufschlagt und deren zweites Ende den Dosierkolben beaufschlagt.

Der erfindungsgemäße Einleitungsverteiler ermöglicht somit bei einem besonders einfachen Aufbau des Einleitungsverteilers eine genau dosierte und zuverlässige Verteilung von Schmierstoff.

Erfindungsgemäß wird außerdem ein Verfahren vorgeschlagen mit den Schritten:
(i) durch einen Schmierstoffeinlass des Einleitungsverteilers zugeführter Schmierstoff verschiebt einen beweglich gelagerten Steuerkolben gegen die Kraft einer Feder an ihrem ersten Ende von einer Ausgangsposition in eine Arbeitsposition,
(ii) der zugeführte Schmierstoff fließt durch einen Druckkanal zu einem Dosierraum und verschiebt einen beweglichen Dosierkolben entgegen der Kraft der Feder an ihrem zweiten Ende, wodurch ein einstellbares Schmierstoff-Volumen aus einer Entlastungskammer aus einem Schmierstoffauslass gedrückt wird,
(iii) durch eine Druckentlastung am Einlass wird der Steuerkolben durch die Feder an ihrem ersten Ende zurück in die Ausgangsposition verschoben,
(iv) das zweite Ende der Feder verschiebt den Dosierkolben, wodurch Schmierstoff im Dosierraum durch den Druckkanal und durch die Verbindung des Steuerkolbens in die Entlastungskammer befördert wird.

Das erfindungsgemäße Verfahren zur Verteilung von Schmierstoff ermöglicht somit bei einem besonders einfachen Aufbau des Einleitungsverteilers eine genau dosierte und zuverlässige Verteilung von Schmierstoff.

In einer bevorzugten Ausgestaltung ist der Einleitungsverteiler dazu ausgebildet, einen Schmiervorgang gemäß den folgenden Schritten auszuführen:
(i) durch den Schmierstoffeinlass zugeführter Schmierstoff verschiebt den Steuerkolben gegen die Kraft der Feder an ihrem ersten Ende von der Ausgangsposition in die Arbeitsposition,
(ii) der zugeführte Schmierstoff fließt durch den Druckkanal zu dem Dosierraum und verschiebt den Dosierkolben entgegen der Kraft der Feder an ihrem zweiten Ende, wodurch ein einstellbares Schmierstoff-Volumen aus der Entlastungskammer aus dem Schmierstoffauslass gedrückt wird,
(iii) durch eine Druckentlastung am Einlass wird der Steuerkolben durch die Feder an ihrem ersten Ende zurück in die Ausgangsposition verschoben,
(iv) das zweite Ende der Feder verschiebt den Dosierkolben, wodurch Schmierstoff im Dosierraum durch den Druckkanal und durch die erste Schmierstoff-Verbindung in die Entlastungskammer befördert wird.

In einer bevorzugten Ausgestaltung der Erfindung ist vorgesehen, dass die Feder zwischen ihren Enden, insbesondere im unteren Drittel der Feder, im mittleren Drittel der Feder und/oder im oberen Drittel der Feder, fixiert ist, wobei die Fixierung vorzugsweise am Grundkörper des Einleitungsverteilers erfolgt.

Gemäß dieser Ausgestaltung ist die Kraft, die die Feder an ihrem ersten Ende auf den Steuerkolben ausübt unabhängig von der Kraft, die die Feder an ihrem zweiten Ende auf den Dosierkolben ausübt. Experimente haben gezeigt, dass hierdurch eine besonders zuverlässige Funktionsweise des Einleitungsverteilers erreicht werden kann.

Die Fixierung der Feder kann erreicht werden über eine Verschraubung der Feder mit dem Gehäuse des Einleitungsverteilers. Hierzu können z.B. zwei Schraubringe verwendet werden, die von unten und oben auf die Feder aufgesetzt werden.

In einer weiteren Ausgestaltung der Erfindung ist vorgesehen, dass die Feder als Schraubenfeder ausgebildet ist und einen ersten endseitigen Bereich sowie einen gegenüberliegenden zweiten endseitigen Bereich und dazwischen einen Befestigungsbereich mit einem gegenüber dem ersten und/oder zweiten Bereich erweiterten oder reduzierten Durchmesser aufweist.

Bei einem erweiterten Durchmesser des Befestigungsbereichs kann sich die Feder an ihrem Befestigungsbereich an einem Vorsprung des Gehäuses abstützen. Vorzugsweise kann der Innenraum des Einleitungsverteilers zwei unterschiedliche Durchmesser aufweisen, z.B. einen ersten Bereich mit einem ersten, kleineren Durchmesser und einen zweiten Bereich mit einem zweiten, größeren Durchmesser. Der Wechsel von größerem zu kleinerem Durchmesser bietet somit einen Vorsprung, an dem sich der Befestigungsbereich der Feder anlegen und diese in eine Richtung fixieren kann. In eine axiale Richtung (z.B. in Richtung zum Schmierstoffeinlass) kann somit eine Befestigung der Feder ohne ein zusätzliches Fixierungselement erfolgen. Zur Fixierung in die andere Richtung (z.B. in Richtung weg vom Schmierstoffeinlass) kann die Fixierung über ein Klemmelement (z.B. in Form eines Ringes) erfolgen. Das Klemmelement kann gegenüber dem Gehäuse durch einen Sicherungsring befestigt sein.

Erfindungsgemäß ist es somit möglich, dass bei der Herstellung des Einleitungsverteilers die Feder von einer Seite in das Gehäuse eingeschoben wird und nur noch mit einem weiteren Klemmteil (und ggf. Sicherungsring) befestigt werden muss.

In einer weiteren Ausgestaltung ist vorgesehen, dass die Freigabe der ersten Schmierstoff-Verbindung durch eine Nut an dem Steuerkolben erfolgt, insbesondere durch eine Nut, die sich über einen Teil der Länge des Steuerkolbens erstreckt.

Die sich über einen Teil der Länge des Steuerkolbens erstreckende Nut ermöglicht, dass Schmierstoff, der von dem Druckkanal zugeführt wird, entlang der Nut um den Steuerkolben herum in die Entlastungskammer fließt.

In einer weiteren Ausgestaltung ist vorgesehen, dass die Freigabe der ersten Schmierstoff-Verbindung durch einen Kanal in dem Steuerkolben erfolgt.

Der Kanal durch den Steuerkolben kann zum Beispiel hergestellt werden, indem der Steuerkolben mit einer Bohrung in axialer Richtung versehen wird. Außerdem kann eine Bohrung in radialer Richtung zu der Bohrung in axialer Richtung hinführen, so dass von dem Druckkanal zugeführter Schmierstoff von der Seite dem Steuerkolben zugeführt werden kann und durch die axiale Bohrung des Steuerkolbens nach oben in die Entlassungskammer geführt wird.

In einer weiteren Ausgestaltung ist vorgesehen, dass die vordosierte Menge am Einleitungsverteiler einstellbar ist, insbesondere durch Schrauben, die den Hubweg des Dosierkolbens einschränken.

Vorteilhafterweise können die Schrauben an verschiedenen Positionen befestigt werden. Zum Beispiel kann vorgesehen sein, dass die Schrauben durch unterschiedlich tiefe Verschraubung unterschiedlich nah an dem Dosierkolben angeordnet sind und somit unterschiedliche Wege ermöglichen.

In einer weiteren Ausgestaltung ist vorgesehen, dass die Schrauben von außen zugänglich sind und dass zwischen den Schrauben und dem Dosierkolben ein Hubstift angeordnet ist, der den Bewegungsspielraum des Dosierkolbens beschränkt.

In einer weiteren Ausgestaltung ist vorgesehen, dass der Steuerkolben und der Dosierkolben entlang einer Achse gelagert sind, wobei vorzugsweise der Druckkanal parallel zu dieser Achse verläuft.

Ein Hubstift zwischen dem Dosierkolben und den Schrauben ermöglicht, dass die Schrauben leicht zugänglich weiter entfernt von dem (im Einleitungsverteiler angeordneten) Dosierkolben angeordnet sein können. Somit ist eine besonders einfache Einstellbarkeit des Einleitungsverteilers gegeben.

In einer weiteren Ausgestaltung ist vorgesehen, dass der Dosierkolben und/oder der Steuerkolben die Feder teilweise umschließt. Hierdurch kann die Feder stabilisiert werden und der Dosierkolben bzw. der Steuerkolben kann an einer größeren Fläche an der Wand anliegen. Insbesondere im Falle des Dosierkolbens kann somit eine bessere Abdichtung zwischen Dosierkolben und Innenwand des Grundkörpers (Gehäuses) des Einleitungsverteilers erzielt werden.

In einer weiteren Ausgestaltung ist vorgesehen, dass der Einleitungsverteiler einen vorzugsweise einstückigen Grundkörper umfasst, in dem Steuerkolben und Dosierkolben zumindest teilweise aufgenommen sind.

In einer weiteren Ausgestaltung ist vorgesehen, dass der Steuerkolben innerhalb einer Steuerkolbenhülse gelagert ist, wobei diese Steuerkolbenhülse unbeweglich oder weitgehend unbeweglich innerhalb des Grundkörpers gelagert ist. Die Befestigung der Steuerkolbenhülse kann durch Verschraubung mit dem Gehäuse erfolgen. Alternativ kann die Steuerkolbenhülse eingesetzt und mit einem Sicherungsring bzw. einer Sicherungsstütze gesichert werden.

In einer Ausgestaltung des erfindungsgemäßen Verfahrens ist vorgesehen, dass der Schmierstoff durch die Haupt-Schmierstoffleitung mit Druck mit Entlastungszyklen zugeführt wird.

In einer Weiterbildung der vorliegenden Erfindung kann der Grundkörper noch eine verschließbare Befüllöffnung, z.B. realisiert durch einen der Schmierstoffauslässe, zum anfänglichen Befüllen und/oder Entlüften des Einleitungsverteilers aufweisen. Hierdurch wird eine besonders einfache Befüll- und/oder Entlüftungsmöglichkeit geschaffen.

Nach einem weiteren Aspekt der vorliegenden Erfindung kann der Einleitungsverteiler in Scheibenbauweise ausgestaltet sein und so den Anschluss eines gleichartigen Einleitungsverteilers zur Ausbildung einer modular ausgebauten Anordnung gestatten.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
Fig. 1: eine Schnittansicht einer Ausführungsform des erfindungsgemäßen Einleitungsverteilers,
Fig. 2A, 3A, 4A, 5A und 6A: Schnittansichten der Ausführungsform aus Fig. 1 bei verschiedenen Schritten des Schmierverfahrens, wobei durch Pfeile die Bewegung des Schmierstoffs bzw. der Kolben im jeweiligen Verfahrensschritt angedeutet sind,
Fig. 2B, 3B, 4B, 5B und 6B: Schnittansichten der Ausführungsform aus Fig. 1 bei verschiedenen Schritten des Schmierverfahrens, wobei die schwarz ausgefüllten Flächen die Verteilung des Schmierstoffs im jeweiligen Arbeitsschritt darstellen,
Fig. 7A, 7B und 7C: verschiedene Ansichten einer erfindungsgemäßen Steuerkolbenhülse,
Fig. 8: eine perspektivische Ansicht eines ersten erfindungsgemäßen Steuerkolbens und
Fig. 9: eine perspektivische Ansicht eines zweiten erfindungsgemäßen Steuerkolbens.

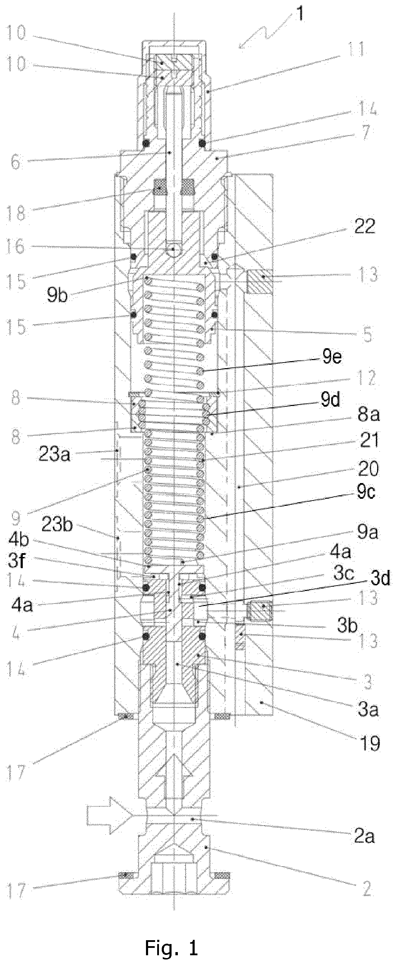

Figur 1 zeigt eine Querschnittsansicht eines erfindungsgemäßen Einleitungsverteilers 1 in der Ausgangsposition. Die Zuführung des Schmierstoffs erfolgt über einen Schmierstoffeinlass 2a. Der Schmierstoffeinlass 2a ist dabei als ein Kanal ausgebildet, der teilweise in radialer Richtung und teilweise in axialer Richtung verläuft. Der Schmierstoffeinlass 2a verläuft bei der hier dargestellten konkreten Ausgestaltung innerhalb einer Klemmschraube 2, die schraubbar an dem Grundkörper 19 des Einleitungsverteilers 1 befestigt werden kann. An der Klemmschraube 2 und an dem Grundkörper 19 befinden sich Usit-Ringe 17. In anderen Ausgestaltungen der Erfindung können dabei auch andere Dichtelemente vorgesehen sein.

Direkt an die Klemmschraube 2 anschließend und teilweise innerhalb der Klemmschraube 2 angeordnet befindet sich die Steuerkolbenhülse 3. Innerhalb der Steuerkolbenhülse 3 befindet sich in axialer Richtung ein Hauptkanal 3a. Außerdem sind zwei radiale Kanäle 3c, 3b vorgesehen. Der erste Kanal 3c realisiert eine erste Schmierstoff-Verbindung zwischen der Entlastungskammer und dem zu dem Dosierraum führenden Druckkanal. Der zweite Kanal 3b realisiert eine zweite Schmierstoff-Verbindung und ist so positioniert, dass er eine Fluidverbindung zu dem Druckkanal 20 des Gehäuses 19 herstellt. Die beiden Kanäle 3b und 3c verlaufen radial und münden in eine Ringnut 3d.

Im Hauptkanal 3a der Steuerkolbenhülse 3 ist der Steuerkolben 4 beweglich gelagert. Der Kolben 4 weist eine Nut 4a auf. In der Ausgangsposition des Einleitungsverteilers 1 liegt das Kolbenoberteil 4b an einer Hervorhebung 3f der Steuerkolbenhülse 3 an. Die Nut 4a des Kolbens 4 erstreckt sich dabei in axialer Richtung so weit, dass sie gerade bis zu dem ersten Kanal 3c reicht. In der Ausgangsposition ist somit die erste Schmierstoffverbindung zwischen der Entlastungskammer 21 und dem Kanal 20 zu dem Dosierraum 22 freigegeben.

Parallel zu der Entlastungskammer 21 verläuft in dem Gehäuse 19 der Kanal 20, der die Ringnut 3e und somit den ersten Kanal 3c und den zweiten Kanal 3b mit einem Dosierraum 22 oberhalb des Dosierkolbens 5 verbindet. Der Dosierraum 22 ist dabei definiert durch den Zwischenraum zwischen dem Dosierkolben 5 und dem Deckel 7 bzw. der Innenwand des Gehäuses 19. In der Ausgangsposition liegt der Dosierkolben 5 an dem Deckel 7 an, so dass der Dosierraum 22 vorliegend nur ein minimales Volumen aufweist.

Der Kanal 20 kann bei der Herstellung des Einleitungsverteilers 1 z.B. hergestellt werden durch eine Bohrung in axialer Richtung sowie zwei Bohrungen in Radialrichtung.

Im Innenraum des Gehäuses 19 befindet sich die Entlastungskammer 21, die unten durch die Steuerkolbenhülse 3 und oben durch den Dosierkolben 5 begrenzt wird. An die Entlastungskammer 21 schließen sich ein erster und ein zweiter Schmierstoffauslass 23a, 23b an.

Zwischen dem Steuerkolben 4 und dem Dosierkolben 5 verläuft in axialer Richtung die Feder 9. Ihr erstes Ende 9a liegt dabei an dem Steuerkolben 4 an, ihr zweites Ende 9b an dem Dosierkolben 5. Die Feder 9 wird teilweise von dem Dosierkolben 5 umgeben, liegt also mit ihrem zweiten Ende 9b an einer Fläche des Dosierkolbens 5 an, die in der hier dargestellten Ausführungsform ungefähr in der Mitte des Dosierkolbens 5 liegt.

Der Dosierkolben 5 ist mit einem O-Ring 15 gegenüber der Innenwand des Gehäuses 19 abgedichtet.

Im Mittelbereich 9d der Feder 9 weist die Feder einen erhöhten Durchmesser auf und ist die durch Klemmen 8 relativ zum Gehäuse 19 fixiert. Durch einen Sicherungsring 12 und einen Vorsprung 8a, an dem die Klemmen 8 anliegen, ist dabei sichergestellt, dass sich die Klemmen 8 und somit der fixierte Teil der Feder 9 auch bei Druckbelastung nicht verschieben.

Der Dosierkolben 5 weist eine Aufnahme für eine Kugel 16 als Distanzelement und einen Hubstift 6 auf. Der Hubstift 6 wird, abgedichtet durch die Kolbenstangen-Dichtung 18, durch den Deckel 7 geführt. Am oberen Ende stößt der Hubstift 6 gegen eine untere Verschluss-Schraube 10 an. Der Deckel 7 weist oben ein Gewinde auf, so dass untere und obere Verschluss-Schraube 10 axial an unterschiedlicher Position befestigt werden können. Hierdurch lässt sich einstellen, in welcher Position der Hubstift 6 gegen die untere Verschluss-Schraube 10 anstößt. Somit lässt sich der Hubweg des Dosierkolbens 5 einstellen. Der Deckel 7 wird durch eine Schutzkappe 11, zum Beispiel aus Plastik oder Metall, abgedeckt, so dass ein versehentliches Verstellen der Position der Verschluss-Schrauben 10 ausgeschlossen ist. Ein O-Ring 14 verhindert, dass Schmutz unter die Schutzkappe 11 gelangt.

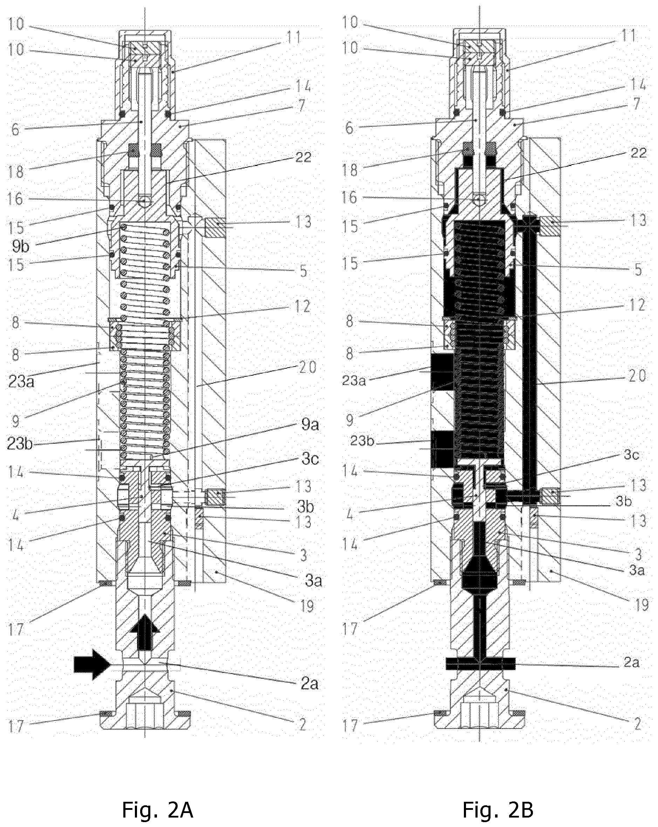

Mit Bezug auf die Figuren 2A bis 6B soll im Folgenden die Funktionsweise des in Fig. 1 dargestellten Einleitungsverteilers 1 erläutert werden. Dabei ist in den Figuren 2A, 3A, 4A, 5A und 6A durch Pfeile gekennzeichnet, wie sich Schmierstoff, Dosierkolben 5 und/oder Steuerkolben 4 während des jeweiligen Arbeitsschrittes bewegen. In den Figuren 2B, 3B, 4B, 5B und 6B ist durch schwarz ausgefüllte Flächen gekennzeichnet, wo sich in dem jeweiligen Arbeitsschritt Schmierstoff befindet. Der Übersichtlichkeit halber sind in den Figuren 2A bis 6B nicht alle Bezugszeichen aus Fig. 1 wiederholt.

Die Figuren 2A und 2B zeigen den Einleitungsverteiler 1 in der Ausgangsposition. Durch den Schmierstoffeinlass 2a wird Schmierstoff unter Druck zugeführt und bewirkt eine nach oben gerichtete Kraft auf den Steuerkolben 4. Wie in Figur 2B gezeigt ist, ist der Einleitungsverteiler 1 hierbei bereits vollständig mit Schmierstoff befüllt. Diese Befüllung kann zum Beispiel über den ersten oder zweiten Schmierstoffauslass 23a, 23b erfolgt sein.

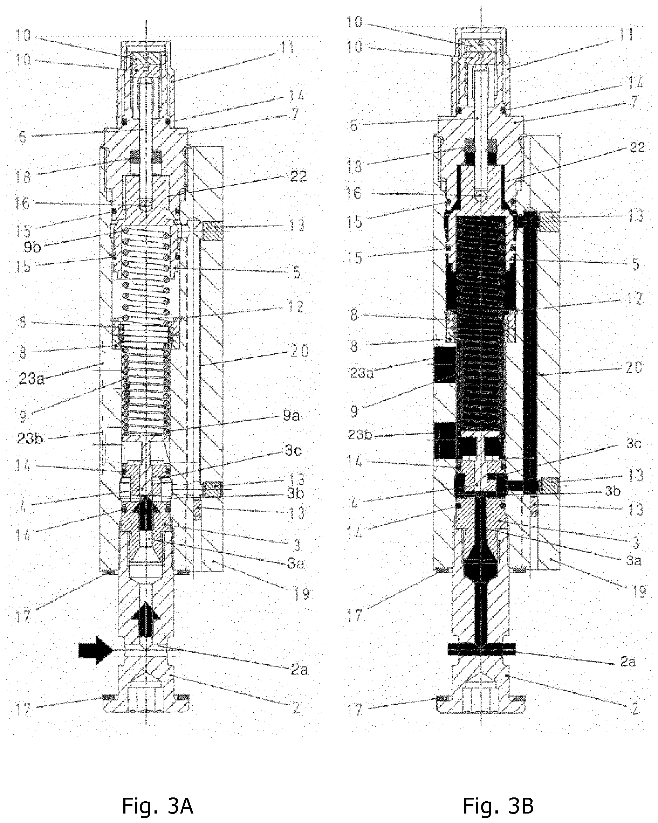

Die Figuren 3A und 3B geben den ersten Arbeitsschritt wieder, in dem ein Druckaufbau erfolgt. Der Steuerkolben 4 wird in diesem Arbeitsschritt durch den über den Schmierstoffeinlass 2a mit Druck zugeführten Schmierstoff entgegen die Kraft der Feder 9 an ihrem ersten Ende 9a nach oben in die Arbeitsposition verschoben. Hierdurch ist von dem Hauptkanal 3a eine Verbindung zum Seitenkanal 3b freigegeben.

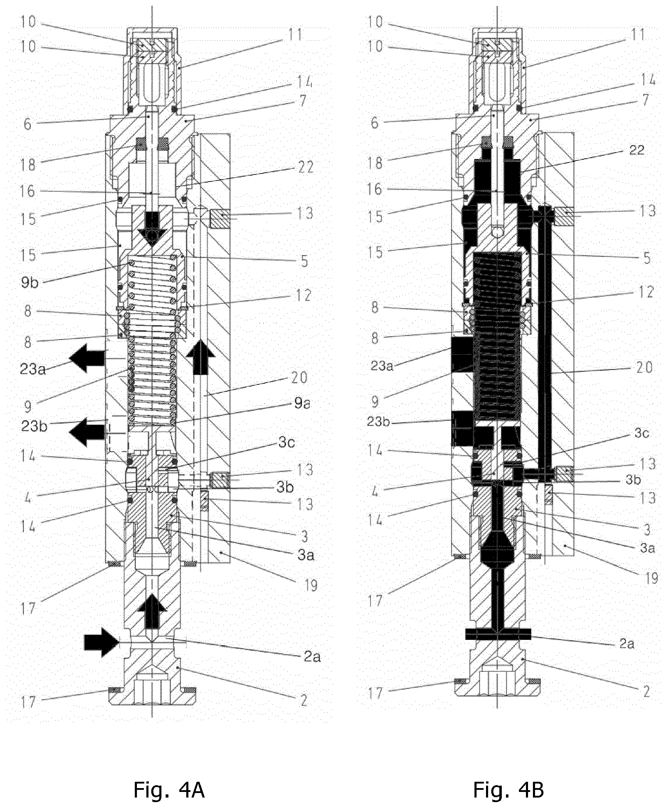

Die Figuren 4A und 4B zeigen den zweiten Arbeitsschritt, d.h. den eigentlichen Schmiervorgang. In diesem Arbeitsschritt ist die Verbindung von Hauptkanal 3a zum Seitenkanal 3b weiterhin freigegeben, so dass der durch den Schmierstoffeinlass 2a mit Druck zugeführte Schmierstoff durch den Kanal 20 dem Dosierraum 22 zugeführt wird und den Dosierkolben 5 gegen die Kraft der Feder 9 an ihrem zweiten Ende 9b nach unten verschiebt. Durch diese Verschiebung des Dosierkolbens 6 wird Schmierstoff, der sich in der Entlastungskammer befindet, aus den Schmierstoffauslässen 23a, 23b heraus gedrückt. Nach Ausstoß des über die Position der Verschluss-Schrauben 10 eingestellten Volumens liegt der Dosierkolben 5 an den Klemmteilen 8 an, so dass auch bei weiterhin hohem Druck vom Schmierstoffeinlass 2a keine weitere Bewegung nach unten erfolgt und kein weiterer Schmierstoff ausgestoßen wird. Der erfindungsgemäße Einleitungsverteiler 1 ermöglicht somit unabhängig von der genauen Stärke des Drucks am Schmierstoffeinlass 2a eine genau dosierte Abgabe von Schmierstoff aus den Schmierstoffauslässen 23a, 23b.

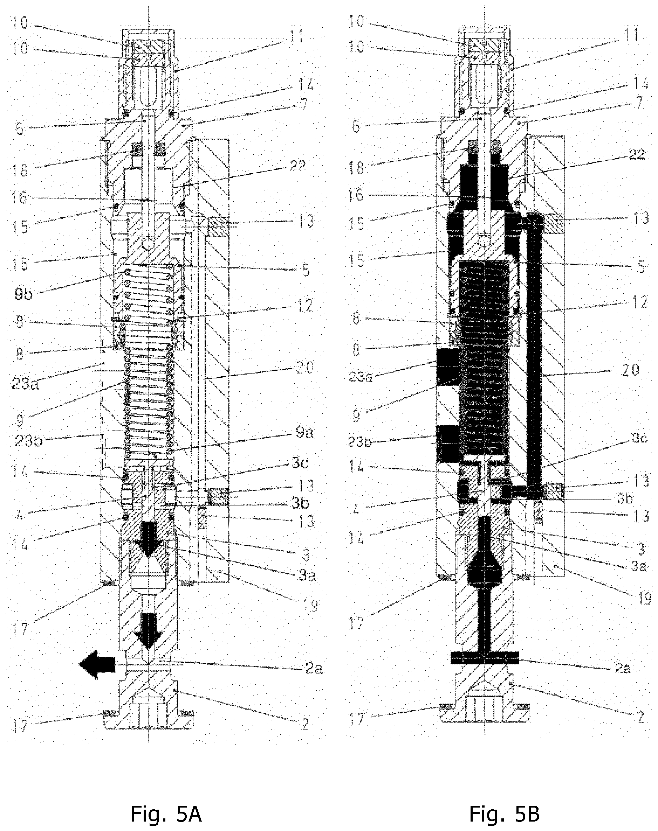

In den Figuren 5A und 5B ist der dritte Arbeitsschritt, d.h. die Druckentlastung dargestellt. In diesem Arbeitsschritt übt eine an den Schmierstoffeinlass 2a angeschlossene Schmierstoff-Hauptleitung einen deutlich geringeren Druck aus. Die Kraft der Feder 9 an ihrem ersten Ende 9a ist daher stark genug, um Schmierstoff nach unten aus dem Schmierstoffeinlass 2a herauszurücken. Hierbei erfolgt ein Umsteuervorgang, d.h. eine Verschiebung des Steuerkolbens 4 nach unten zurück in seine Ausgangsposition.

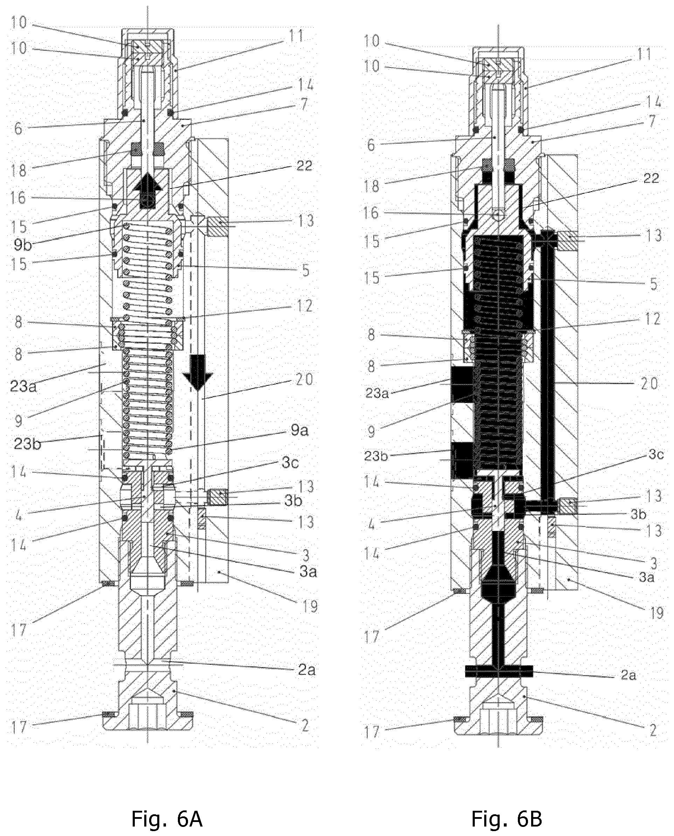

In den Figuren 6A und 6B ist der vierte Arbeitsschritt, d.h. der Umschichtvorgang dargestellt. Der Steuerkolben 4 gibt in seiner Ausgangsposition eine erste Schmierstoff-Verbindung 3c zwischen dem Kanal 20 und der Entlastungskammer 21 frei. Somit kann der Dosierkolben 5, vorangetrieben durch die Kraft der Feder 9 an ihrem zweiten Ende 9b, sich nach oben bewegen und den im Dosierraum 22 befindlichen Schmierstoff durch den Kanal 20 und durch die freigegebene erste Schmierstoff-Verbindung 3c in die Entlastungskammer 21 drücken. Der Einleitungsverteiler 1 ist somit bereit für den nächsten Arbeitsvorgang.

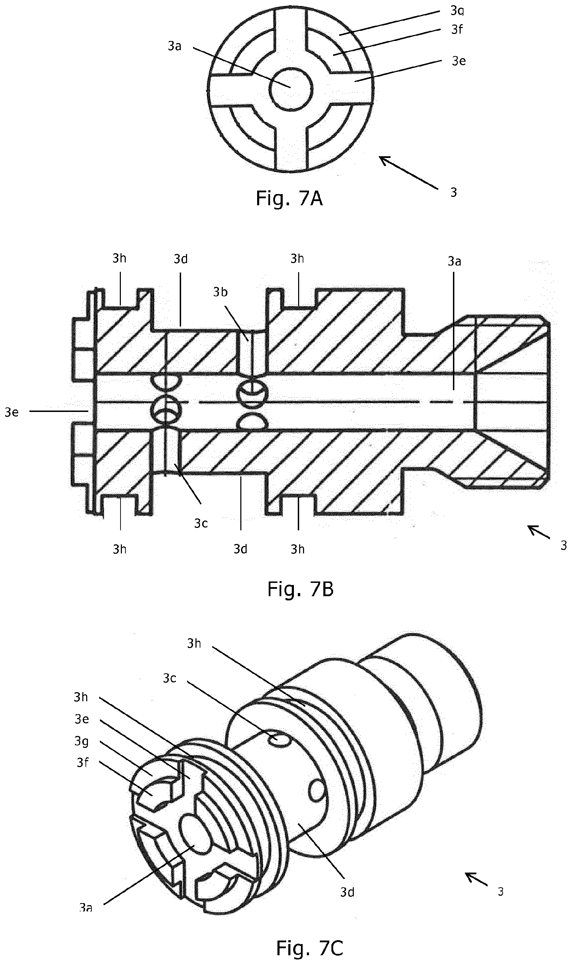

Figur 7A zeigt eine Draufsicht, Figur 7B eine Querschnittsansicht und Figur 7C eine perspektivische Ansicht einer erfindungsgemäßen Steuerkolbenhülse. In Figur 7A ist in der Mitte die obere Mündung des Hauptkanals 3a sichtbar. Radial verlaufen vier Nutkanäle 3e zur Führung von Schmierstoff. Wie in Figur 7C dargestellt, befinden sich zwischen den vier Nutkanälen 3e vier runde Hervorhebungen 3f, 3g, die jeweils aus einer inneren Hervorhebung 3f und einer äußeren Hervorhebung 3g bestehen. Die innere Hervorhebung 3f ist dabei höher als die äußere Hervorhebung 3g.

Bei der in den Figuren 7A bis 7C dargestellten Steuerkolbenhülse 3 sind die erste und zweite Schmierstoff-Verbindung 3c, 3b jeweils als mehrere radiale Kanäle ausgebildet. Die radialen Kanäle 3c, 3b verlaufen dabei in dem Abschnitt der Steuerkolbenhülse 3, in dem an der Steuerkolbenhülse 3 eine Ringnut 3d als Schmierstoff-Kanal vorgesehen ist. Außerdem weist die Steuerkolbenhülse 3 zwei Ringnuten 3h auf, in denen Dichtungsringe (O-Ringe) 14 positioniert werden können, so dass die Steuerkolbenhülse 3 relativ zum Gehäuse abgedichtet ist.

In der vorliegend dargestellten Ausführungsform weitet sich an dem Ende der Steuerkolbenhülse 3, das dem Schmierstoffeinlass 2a zugewandt ist, der Hauptkanal 3a in einem Winkel von 30° auf. In anderen Ausführungsformen sind hierfür auch größere oder kleinere Winkel möglich.

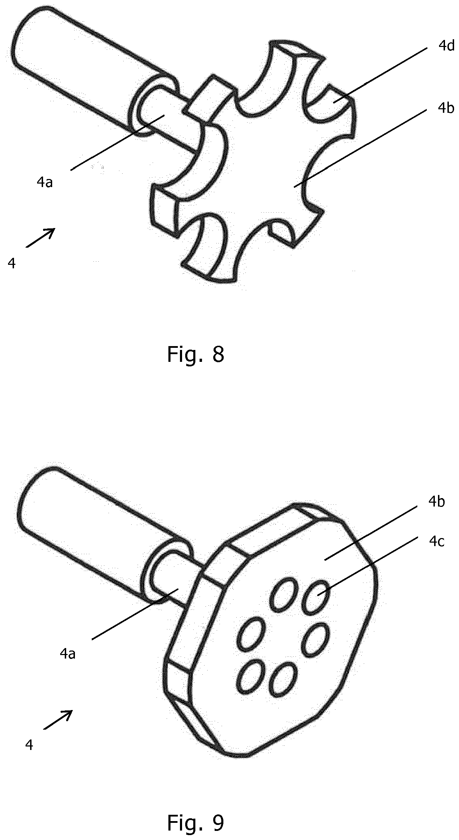

Figur 8 zeigt einen ersten erfindungsgemäßen Steuerkolben 4. Der Steuerkolben 4 weist eine Nut 4a auf, über die Schmierstoff um den Steuerkolben 4 herum fließen kann. Das Oberteil 4b des Steuerkolbens 4 ist rund mit 6 Aussparungen 4d, die jeweils einen Kanal für Schmierstoff bilden.

Figur 9 zeigt einen zweiten erfindungsgemäßen Steuerkolben 4. Der in Figur 9 gezeigte Steuerkolben 4 weist ebenfalls eine Nut 4a auf. Das Oberteil 4b hat mehrere gerade Randflächen, die jeweils einen Kanal für Schmierstoff bilden. Außerdem weist es 6 Bohrungen 4c auf, die als Kanäle für den Schmierstoff dienen. Die Bohrungen sind dabei kreisförmig angeordnet.

Die in Figur 8 und Figur 9 gezeigten Steuerkolben können jeweils in dem in Fig. 1 bis 6B dargestellten Einleitungsverteiler verwendet werden. Insbesondere können die in Figur 8 und 9 dargestellten Steuerkolben dabei in Kombination mit der in den Figuren 7A bis 7C dargestellten Steuerkolbenhülse 3 verwendet werden.

### Bezugszeichenliste:

- 1: Einleitungsverteiler
- 2: Klemmschraube
- 2a: Schmierstoffeinlass
- 3: Steuerkolbenhülse
- 3a: Hauptkanal
- 3b: Zweiter Kanal
- 3c: Erster Kanal
- 3d: Ringnut
- 3e: Nut
- 3f: Innere Hervorhebung
- 3g: Äußere Hervorhebung
- 3h: Ringnut für O-Ring
- 4: Steuerkolben
- 4a: Nut
- 4b: Oberteil des Steuerkolbens
- 4c: Bohrung
- 4d: Aussparung
- 5: Dosierkolben
- 6: Hubstift
- 7: Deckel
- 8: Klemmen
- 8a: Vorsprung
- 9: Feder
- 9a: Unteres Ende der Feder
- 9b: Oberes Ende der Feder
- 9c: Erster endseitiger Bereich
- 9d: Befestigungsbereich
- 9e: Zweiter endseitiger Bereich
- 10: Verschluss-Schraube
- 11: Schutzkappe
- 12: Sicherungsring
- 13: Expander
- 14: O-Ring
- 15: O-Ring
- 16: Kugel
- 17: Usit-Ring
- 18: Kolbenstangendichtung
- 20: Druckkanal
- 21: Entlastungskammer
- 22: Dosierraum
- 23a, 23b: Schmierstoffauslass

## Patentansprüche

1. Einleitungsverteiler (1) zur Verteilung von Schmierstoff, umfassend
- einen Schmierstoffeinlass (2a), der mit einer Schmierstoffpumpe fluidisch verbunden und/oder verbindbar ist, insbesondere über eine Schmierstoff-Hauptleitung,
- einen Schmierstoffauslass (23a, 23b) zur Weitergabe einer vordosierten Menge an Schmierstoff,
- einen Dosierraum (22),
- eine Entlastungskammer (21), zur Aufnahme von Schmierstoff,
- einen beweglich gelagerten Steuerkolben (4), der in einer Ausgangsposition eine erste Schmierstoff-Verbindung (3c) zwischen der Entlastungskammer (21) und einem zu dem Dosierraum (22) führenden Druckkanal (20) freigibt und eine zweite Schmierstoff-Verbindung (3b) zwischen dem Schmierstoffeinlass (2a) und dem Druckkanal (20) sperrt, wobei der Steuerkolben (4) in einer Arbeitsposition die erste Schmierstoff-Verbindung (3c) sperrt und die zweite Schmierstoff-Verbindung (3b) freigibt,
- einen beweglich gelagerten Dosierkolben (5),
- eine Feder (9), deren erstes Ende (9a) den Steuerkolben (4) beaufschlagt,
**dadurch gekennzeichnet, dass**
das zweite Ende (9b) der Feder (9) den Dosierkolben (5) beaufschlagt.

2. Einleitungsverteiler nach Anspruch 1 **dadurch gekennzeichnet, dass** der Einleitungsverteiler (1) dazu ausgebildet ist, einen Schmiervorgang gemäß den folgenden Schritten auszuführen:
(i) durch den Schmierstoffeinlass (2a) zugeführter Schmierstoff verschiebt den Steuerkolben (4) gegen die Kraft der Feder (9) an ihrem ersten Ende (9a) von der Ausgangsposition in die Arbeitsposition,
(ii) der zugeführte Schmierstoff fließt durch den Kanal (20) zu dem Dosierraum (22) und verschiebt den Dosierkolben (5) entgegen der Kraft der Feder (9) an ihrem zweiten Ende (9b), wodurch ein einstellbares Schmierstoff-Volumen aus der Entlastungskammer (21) aus dem Schmierstoffauslass (23a, 23b) gedrückt wird,
(iii) durch eine Druckentlastung am Schmierstoffeinlass (2a) wird der Steuerkolben (4) durch die Feder (9) an ihrem ersten Ende (9a) zurück in die Ausgangsposition verschoben,
(iv) das zweite Ende (9b) der Feder (9) verschiebt den Dosierkolben (5), wodurch Schmierstoff im Dosierraum (22) durch den Kanal (20) und durch die erste Schmierstoff-Verbindung (3c) in die Entlastungskammer (21) befördert wird.

3. Einleitungsverteiler (1) nach einem der vorherigen Ansprüche, **dadurch gekennzeichnet, dass** die Feder (9) als Schraubenfeder ausgebildet ist und einen ersten endseitigen Bereich (9c) sowie einen gegenüberliegenden zweiten endseitigen Bereich (9e) und dazwischen einen Befestigungsbereich (9d) mit einem gegenüber dem ersten und/oder zweiten Bereich erweiterten oder reduzierten Durchmesser aufweist.

4. Einleitungsverteiler (1) nach einem der vorherigen Ansprüche, **dadurch gekennzeichnet, dass** die Feder (9) zwischen ihren Enden (9a, 9b), insbesondere im unteren Drittel der Feder, im mittleren Drittel der Feder (9) und/oder im oberen Drittel der Feder, fixiert ist, wobei die Fixierung vorzugsweise am Grundkörper (19) des Einleitungsverteilers (1) erfolgt.

5. Einleitungsverteiler (1) nach einem der vorherigen Ansprüche, **dadurch gekennzeichnet, dass** die erste Schmierstoff-Verbindung (3c) zwischen der Entlastungskammer (21) und dem Kanal (20) realisiert ist durch eine Nut (4a) an dem Steuerkolben (4), insbesondere durch eine Nut (4a), die sich über einen Teil der Länge des Steuerkolbens (4) erstreckt.

6. Einleitungsverteiler (1) nach einem der Ansprüche 1 bis 4, **dadurch gekennzeichnet, dass** die erste Schmierstoff-Verbindung (3c) zwischen der Entlastungskammer (21) und dem Kanal (20) realisiert ist durch einen Kanal in dem Steuerkolben (4).

7. Einleitungsverteiler nach einem der vorherigen Ansprüche, **dadurch gekennzeichnet, dass** die vordosierte Menge am Einleitungsverteiler (1) einstellbar ist, insbesondere durch Schrauben (10), die den Hubweg des Dosierkolbens (5) einschränken.

8. Einleitungsverteiler (1) nach Anspruch 7, **dadurch gekennzeichnet, dass** die Schrauben (10) von außen zugänglich sind und dass zwischen den Schrauben (10) und dem Dosierkolben (5) ein Hubstift (6) angeordnet ist, der den Hubweg des Dosierkolbens (5) beschränkt.

9. Einleitungsverteiler (1) nach einem der vorherigen Ansprüche,
**dadurch gekennzeichnet, dass** Steuerkolben (4) und Dosierkolben (5) entlang einer Achse gelagert sind, wobei vorzugsweise der Kanal (20) parallel zu dieser Achse verläuft.

10. Einleitungsverteiler (1) nach einem der vorherigen Ansprüche, **dadurch gekennzeichnet, dass** der Dosierkolben (5) und/oder der Steuerkolben (4) die Feder (9) teilweise umschließt.

11. Einleitungsverteiler (1) nach einem der vorherigen Ansprüche, **dadurch gekennzeichnet, dass** der Einleitungsverteiler (1) einen vorzugsweise einstückigen Grundkörper (19) umfasst, in dem Steuerkolben (4) und Dosierkolben (5) zumindest teilweise aufgenommen sind.

12. Einleitungsverteiler (1) nach Anspruch 11, **dadurch gekennzeichnet, dass** der Steuerkolben (4) innerhalb einer Steuerkolbenhülse (3) gelagert ist, wobei diese Steuerkolbenhülse (3) unbeweglich innerhalb des Grundkörpers (19) gelagert ist.

13. Verfahren zur Verteilung von Schmierstoff, der einem Einleitungsverteiler (1) über eine Haupt-Schmierstoffleitung zugeführt wird, mit den Schritten:
(i) durch einen Schmierstoffeinlass (2a) des Einleitungsverteilers (1) zugeführter Schmierstoff verschiebt einen beweglich gelagerten Steuerkolben (4) gegen die Kraft einer Feder (9) an ihrem ersten Ende (9a) von einer Ausgangsposition in eine Arbeitsposition,
(ii) der zugeführte Schmierstoff fließt durch einen Druckkanal (20) zu einem Dosierraum (22) und verschiebt einen beweglichen Dosierkolben (5) entgegen der Kraft der Feder (9) an ihrem zweiten Ende (9b), wodurch ein einstellbares Schmierstoff-Volumen aus einer Entlastungskammer (21) aus einem Schmierstoffauslass (23a, 23b) gedrückt wird,
(iii) durch eine Druckentlastung am Einlass (2a) wird der Steuerkolben (4) durch die Feder (9) an ihrem ersten Ende (9a) zurück in die Ausgangsposition verschoben,
(iv) das zweite Ende (9b) der Feder (9) verschiebt den Dosierkolben (5), wodurch Schmierstoff im Dosierraum (22) durch den Druckkanal (20) und durch eine Verbindung (4a) des Steuerkolbens (4) in die Entlastungskammer (21) befördert wird.

14. Verfahren nach Anspruch 13, **dadurch gekennzeichnet, dass** der Schmierstoff durch die Haupt-Schmierstoffleitung mit Druck mit Entlastungszyklen zugeführt wird.

## Claims

1. Metering valve distributor (1) for distributing lubricant, comprising
- a lubricant inlet (2a) which is fluidically connected and/or connectable to a lubricant pump, in particular via a lubricant main line,
- a lubricant outlet (23a, 23b) for transfer of a pre-metered amount of lubricant,
- a metering chamber (22),
- a relief chamber (21) for receiving lubricant,
- a movably mounted control piston (4) which, in a starting position, opens up a first lubricant connection (3c) between the relief chamber (21) and a pressure duct (20) leading to the metering chamber (22) and blocks a second lubricant connection (3b) between the lubricant inlet (2a) and the pressure duct (20), wherein, in a working position, the control piston (4) blocks the first lubricant connection (3c) and opens up the second lubricant connection (3b),
- a movably mounted metering piston (5),
- a spring (9), the first end (9a) of which acts upon the control piston (4),
**characterized in that**
the second end (9b) of the spring (9) acts upon the metering piston (5).

2. Metering valve distributor according to claim 1, **characterized in that** the metering valve distributor (1) is configured to perform a lubricating operation according to the following steps:
(i) lubricant supplied through the lubricant inlet (2a) displaces the control piston (4) against the force of the spring (9) at the first end (9a) thereof from the starting position into the working position,
(ii) the supplied lubricant flows through the duct (20) to the metering chamber (22) and displaces the metering piston (5) against the force of the spring (9) at the second end (9b) thereof, whereby an adjustable lubricant volume from the relief chamber (21) is pressed out from the lubricant outlet (23a, 23b),
(iii) by a pressure relief means at the lubricant inlet (2a), the control piston (4) is displaced by the spring (9) at the first end (9a) thereof back into the starting position,
(iv) the second end (9b) of the spring (9) displaces the metering piston (5), whereby lubricant in the metering chamber (22) is conveyed through the duct (20) and through the first lubricant connection (3c) into the relief chamber (21).

3. Metering valve distributor (1) according to anyone of the preceding claims, **characterized in that** the spring (9) is formed as a coil spring and has a first end side area (9c) as well as an opposite second end side area (9e) and a connecting area (9d) in between with an enlarged or reduced diameter with respect to the first and/or second area.

4. Metering valve distributor (1) according to anyone of the preceding claims, **characterized in that** the spring (9) is fixed between the ends (9a, 9b) thereof, in particular in the lower third of the spring, in the middle third of the spring (9) and/or in the upper third of the spring, wherein the fixing is made preferably at the base body (19) of the metering valve distributor (1).

5. Metering valve distributor (1) according to anyone of the preceding claims, **characterized in that** the first lubricant connection (3c) is realized between the relief chamber (21) and the duct (20) by a grove (4a) on the control piston (4), in particular by a groove (4a) extending along a part of the length of the control piston (4).

6. Metering valve distributor (1) according to anyone of claims 1 to 4, **characterized in that** the first lubricant connection (3c) between the relief chamber (21) and the duct (20) is realized by a channel in the control piston (4).

7. Metering valve distributor (1) according to anyone of the preceding claims, **characterized in that** the pre-metered amount is adjustable at the metering valve distributor (1), in particular by screws (10) limiting the stroke length of the metering piston (5).

8. Metering valve distributor (1) according to claim 7, **characterized in that** the screws (10) are accessible from outside, and that a stroke pin (6) delimiting the stroke length of the metering piston (5) is arranged between the screws (10) and the metering piston (5).

9. Metering valve distributor (1) according to anyone of the preceding claims, **characterized in that** the control piston (4) and the metering piston (5) are mounted along an axis, wherein the duct (20) preferably extends in parallel to said axis.

10. Metering valve distributor (1) according to anyone of the preceding claims, **characterized in that** the metering piston (5) and/or the control (4) partially enclose(s) the spring (9).

11. Metering valve distributor (1) according to anyone of the preceding claims, **characterized in that** the metering valve distributor (1) comprises a preferably integral base body (19) in which the control piston (4) and the metering piston (5) are received at least in part.

12. Metering valve distributor (1) according to claim 11, **characterized in that** the control piston (4) is mounted within a control piston sleeve (3), wherein the control piston sleeve (3) is mounted to be immobile within the base body (19).

13. Method for distributing lubricant which is supplied to a metering valve distributor (1) via a main lubricant line, comprising the steps:
(i) lubricant supplied through a lubricant inlet (2a) of the metering valve distributor (1) displaces a movably mounted control piston (4) against the force of a spring (9) at the first end (9a) thereof from a starting position into a working position,
(ii) the supplied lubricant flows through a pressure duct (20) to a metering chamber (22) and displaces a movable metering piston (5) against the force of the spring (9) at the second end (9b) thereof, whereby an adjustable lubricant volume from a relief chamber (21) is pressed out from a lubricant outlet (23a, 23b),
(iii) by a pressure relief means at the inlet (2a), the control piston (4) is displaced by the spring (9) at the first end (9a) thereof back into the starting position,
(iv) the second end (9b) of the spring (9) displaces the metering piston (5), whereby lubricant in the metering chamber (22) is conveyed through the duct (20) and through a connection (3c) of the control piston (4) into the relief chamber (21).

14. Method according to claim 13, **characterized in that** the lubricant is supplied through the main lubricant line using pressure with relief cycles.

## Revendications

1. Distributeur de vanne de dosage (1) pour la distribution de lubrifiant, comprenant
- une entrée de lubrifiant (2a) qui est reliée et/ou reliable fluidiquement à une pompe à lubrifiant, en particulier via une conduite principale de lubrifiant,
- une sortie de lubrifiant (23a, 23b) pour la transmission d'une quantité prédosée de lubrifiant,
- un compartiment de dosage (22),
- une chambre de décharge (21) pour la réception de lubrifiant,
- un piston de commande (4) logé de façon mobile et qui, dans une position de départ, libère une première liaison de lubrifiant (3c) entre la chambre de décharge (21) et un canal de pression (20) menant au compartiment de dosage (22) et verrouille une deuxième liaison de lubrifiant (3b) entre l'entrée de lubrifiant (2a) et le canal de pression (20), sachant que, dans une position de travail, le piston de commande (4) verrouille la première liaison de lubrifiant (3c) et libère la deuxième liaison de lubrifiant (3b),
- un piston de dosage (5) logé de façon mobile,
- un ressort (9) dont la première extrémité (9a) sollicite le piston de commande (4),
**caractérisé en ce que**
la deuxième extrémité (9b) du ressort (9) sollicite le piston de dosage (5).

2. Distributeur de vanne de dosage selon la revendication 1, **caractérisé en ce que** le distributeur de vanne de dosage (1) est constitué pour exécuter une opération de lubrification selon les étapes suivantes :
(i) du lubrifiant amené par l'entrée de lubrifiant (2a) déplace le piston de commande (4) de la position de départ à la position de travail contre la force du ressort (9) au niveau de sa première extrémité (9a),
(ii) le lubrifiant amené s'écoule par le canal (20) vers le compartiment de dosage (22) et déplace le piston de dosage (5) à l'encontre de la force du ressort (9) au niveau de sa deuxième extrémité (9b), moyennant quoi un volume de lubrifiant réglable provenant de la chambre de décharge (21) est pressé hors de la sortie de lubrifiant (23a, 23b),
(iii) par un moyen de décharge de pression au niveau de l'entrée de lubrifiant (2a), le piston de commande (4) est déplacé par le ressort (9) au niveau de sa première extrémité (9a) de façon à retourner dans la position de départ,
(iv) la deuxième extrémité (9b) du ressort (9) déplace le piston de dosage (5), moyennant quoi du lubrifiant dans le compartiment de dosage (22) est refoulé par le canal (20) et par la première liaison de lubrifiant (3c) vers la chambre de décharge (21).

3. Distributeur de vanne de dosage (1) selon l'une des revendications précédentes, **caractérisé en ce que** le ressort (9) est constitué comme ressort hélicoïdal et présente une première zone d'extrémité (9c) ainsi qu'une deuxième zone d'extrémité (9e) opposée et, entre elles, une zone de fixation (9d) ayant un diamètre élargi ou réduit par rapport à la première et/ou à la deuxième zone.

4. Distributeur de vanne de dosage (1) selon l'une des revendications précédentes, **caractérisé en ce que** le ressort (9) est fixé entre ses extrémités (9a, 9b), en particulier dans le tiers inférieur du ressort, dans le tiers médian du ressort (9) et/ou dans le tiers supérieur du ressort, sachant que la fixation est effectuée de préférence sur le corps de base (19) du distributeur de vanne de dosage (1).

5. Distributeur de vanne de dosage (1) selon l'une des revendications précédentes, **caractérisé en ce que** la première liaison de lubrifiant (3c) est réalisée entre la chambre de décharge (21) et le canal (20) par une rainure (4a) au niveau du piston de commande (4), en particulier par une rainure (4a) qui s'étend sur une partie de la longueur du piston de commande (4).

6. Distributeur de vanne de dosage (1) selon l'une des précédentes revendications 1 à 4, **caractérisé en ce que** la première liaison de lubrifiant (3c) est réalisée entre la chambre de décharge (21) et le canal (20) par un canal dans le piston de commande (4).

7. Distributeur de vanne de dosage selon l'une des revendications précédentes, **caractérisé en ce que** la quantité prédosée est réglable au niveau du distributeur de vanne de dosage (1), en particulier par des vis (10) qui limitent la course de déplacement du piston de dosage (5).

8. Distributeur de vanne de dosage (1) selon la revendication 7, **caractérisé en ce que** les vis (10) sont accessibles de l'extérieur et **en ce qu'**une goupille de déplacement (6) qui limite la course de déplacement du piston de dosage (5) est disposée entre les vis (10) et le piston de dosage (5).

9. Distributeur de vanne de dosage (1) selon l'une des revendications précédentes, **caractérisé en ce que** piston de commande (4) et piston de dosage (5) sont logés le long d'un axe, sachant que de préférence le canal (20) évolue parallèlement à cet axe.

10. Distributeur de vanne de dosage (1) selon l'une des revendications précédentes, **caractérisé en ce que** le piston de dosage (5) et/ou le piston de commande (4) entoure en partie le ressort (9).

11. Distributeur de vanne de dosage (1) selon l'une des revendications précédentes, **caractérisé en ce que** le distributeur de vanne de dosage (1) comprend un corps de base (19) constitué de préférence d'une seule pièce, dans lequel piston de commande (4) et le piston de dosage (5) sont logés au moins en partie.

12. Distributeur de vanne de dosage (1) selon la revendication 11, **caractérisé en ce que** le piston de commande (4) est logé à l'intérieur d'une douille de piston de commande (3), sachant que cette douille de piston de commande (3) est logée de façon immobile à l'intérieur du corps de base (19).

13. Procédé pour la distribution de lubrifiant qui est amené à un distributeur de vanne de dosage (1) via une conduite principale de lubrifiant, comprenant les étapes suivantes :
(i) du lubrifiant amené par une entrée de lubrifiant (2a) du distributeur de vanne de dosage (1) déplace un piston de commande (4) logé de façon mobile d'une position de départ à une position de travail contre la force d'un ressort (9) au niveau de sa première extrémité (9a),
(ii) le lubrifiant amené s'écoule par un canal de pression (20) vers un compartiment de dosage (22) et déplace un piston de dosage (5) mobile à l'encontre de la force du ressort (9) au niveau de sa deuxième extrémité (9b), moyennant quoi un volume de lubrifiant réglable provenant d'une chambre de décharge (21) est pressé hors d'une sortie de lubrifiant (23a, 23b),
(iii) par un moyen de décharge de pression au niveau de l'entrée (2a), le piston de commande (4) est déplacé par le ressort (9) au niveau de sa première extrémité (9a) de façon à retourner dans la position de départ,
(iv) la deuxième extrémité (9b) du ressort (9) déplace le piston de dosage (5), moyennant quoi du lubrifiant dans le compartiment de dosage (22) est refoulé par le canal (20) et par une liaison (4a) du piston de commande (4) vers la chambre de décharge (21).

14. Procédé selon la revendication 13, **caractérisé en ce que** le lubrifiant est amené en pression par la conduite principale de lubrifiant avec des cycles de décharge.
